Europäisches Patentamt

European Patent Office

Office européen des brevets

(11) Veröffentlichungsnummer: **0 209 877**
**A2**

(12) # EUROPÄISCHE PATENTANMELDUNG

(21) Anmeldenummer: 86109983.6

(22) Anmeldetag: 21.07.86

(51) Int. Cl.⁴: **C 02 F 3/12**
**C 02 F 3/10**

(30) Priorität: 25.07.85 DE 3526651

(43) Veröffentlichungstag der Anmeldung:
28.01.87 Patentblatt 87/5

(84) Benannte Vertragsstaaten:
AT CH DE FR GB IT LI NL

(71) Anmelder: Linde Aktiengesellschaft
Abraham-Lincoln-Strasse 21
D-6200 Wiesbaden(DE)

(72) Erfinder: Wildmoser, Alfred, Dipl-Ing.
Flurstrasse 12
D-8013 Haar(DE)

(72) Erfinder: Reimann, Hans, Dr.
Rudolf-Wilke-Weg 21
D-8000 München 71(DE)

(74) Vertreter: Schaefer, Gerhard, Dr.
Linde Aktiengesellschaft Zentrale Patentabteilung
D-8023 Höllriegelskreuth(DE)

(54) Verfahren und Vorrichtung zur biologischen Reinigung von Abwasser.

(57) Bei einem Verfahren zur biologischen Reinigung von organische Verunreinigungen enthaltendem Abwasser wird das Abwasser in einem im wesentlichen längsdurchströmten Becken 1 in Gegenwart von Trägerteilchen 10 für Mikroorganismen mit Schlamm vermischt und über Gaseintragseinrichtungen 11 mit einem sauerstoffhaltigen Gas begast. Behandeltes Abwasser und gegebenenfalls freier Schlamm werden über eine Ableitung (4, 14) unter Zurückhaltung der Trägerteilchen mit Hilfe von Rückhalteeinrichtungen (5, 15) aus dem Becken 1 abgezogen. Über den Strömungsweg des Abwasser-Schlamm-Gemisches wird eine weitgehende Trägerteilchenverteilung aufrechterhalten. Zur Verbesserung der Gleichverteilung der Trägerteilchen über die Beckenlänge ist vorgesehen, das Abwasser und den Schlamm an beiden Endbereichen und/oder im mittleren Bereich des Beckens 1 über entsprechende Anschlüsse (2a, 12a, 2b); (3a, 13a, 3b) zuzuleiten und behandeltes Abwasser sowie gegebenenfalls freien Schlamm zumindest teilweise im mittleren Bereich und/oder an beiden Endbereichen des Beckens 1 abzuleiten.

EP 0 209 877 A2

## Verfahren und Vorrichtung zur biologischen Reinigung von Abwasser

Die Erfindung betrifft ein Verfahren zur biologischen Reinigung von organische Verunreinigungen enthaltendem Abwasser, bei dem das Abwasser in einem im wesentlichen längs durchströmten Becken in Gegenwart von Trägerteilchen für Mikroorganismen mit Schlamm vermischt und mit einem sauerstoffhaltigen Gas begast wird, behandeltes Abwasser und gegebenenfalls freier Schlamm unter Zurückhaltung der Trägerteilchen aus dem Becken abgezogen werden und über den Strömungsweg des Abwasser-Schlamm-Gemisches eine weitgehende Trägerteilchen-Gleichverteilung aufrechterhalten wird, sowie eine Vorrichtung zur Durchführung des Verfahrens.

Bekanntlich kann bei Verwendung von freischwebenden Trägerteilchen als Ansiedlungsfläche für Mikroorganismen die Biomassenkonzentration auch in Belebtschlamm-Anlagen durch das Vorhandensein von auf den Trägerteilchen fixierten Mikroorganismen und gegebenenfalls freiem Belebtschlamm wesentlich erhöht und auf diese Weise ein schneller Abbau von im Abwasser vorhandenen Schmutzstoffen erreicht werden. Dabei werden neuerdings insbesondere offenzellige oder retikulierte Schaumstoffteilchen aus
Polymerverbindungen als Trägerteilchen eingesetzt,deren
spezifisches Gewicht, deren Größe und deren Makroporen so
aufeinander abgestimmt werden, daß zur Intensivierung des
Stoffaustausches ein Auf- und Absteigen der
Schaumstoffteilchen  im Belebungsbecken aufgrund der
vorherrschenden Strömung und Begasung ohne weiteres
möglich ist.

Nachteilig beim Betrieb eines Belebungsbeckens unter
Einsatz solcher Trägerteilchen ist jedoch, daß mit der zum
Auslauf des Belebungsbeckens gerichteten Strömung des
Abwasser-Schlamm-Gemisches allmählich ein Verfrachten der
Trägerteilchen zum Auslaufbereich hin stattfindet. Dadurch
ergibt sich dann am Auslauf, der zum Zurückhalten der
Trägerteilchen inder Regel mit einemSieb oder Lochblech
oder ähnlichen Einrichtungen versehen ist, eine
Konzentrierung der Trägerteilchen, so daß im Laufe der
Zeit die Trägerteilchen nicht nur ein Zusetzen des
Auslaufs bewirken, sondern auch im Einlaufbereich des
Belebungsbeckens, in dem gerade eine hohe
Biomassenkonzentration erwünscht ist, nicht mehr in
ausreichender Zahl vorhanden sind.

Zur Vermeidung einer Trägerteilchenansammlung im Bereich
des Beckenauslaufs ist bereits vorgeschlagen worden, mit
Hilfe der Begasung solche Turbulenzen im Belebungsbecken
zu erzeugen, daß die Trägerteilchen nicht mit der Strömung
des Abwassers zum Auslaufbereich transportiert werden. Vor
allem bei längsdurchströmten Becken ist es jedoch
schwierig, auf die Länge des Strömungsweges gesehen die
Begasung in einzelnen Bereichen des Strömungsweges so
aufeinander abzustimmen, daß tatsächlich aufgrund von
Turbulenzen eine Gleichverteilung der Trägerteilchen
erreicht werden kann.

Der Erfindung liegt die Aufgabe zugrunde, ein Verfahren der eingangs genannten Art sowie eine Vorrichtung zur Durchführung des Verfahrens so auszugestalten, daß unter Beibehaltung einer möglichst hohen Reinigungsleistung auf einfache und wirtschaftliche Weise eine Verbesserung der Gleichverteilung der Trägerteilchen über die Beckenlänge erreicht wird.

Diese Aufgabe wird erfindungsgemäß dadurch gelöst, daß Abwasser und Schlamm an beiden Endbereichen und/oder im mittleren Bereich des Beckens zugeführt werden und behandeltes Abwasser sowie gegebenenfalls freier Schlamm zumindest teilweise im mittleren Bereich und/oder an beiden Endbereichen des Beckens abgeleitet werden.

Mit dieser Verfahrensweise wird der Weg für die Rückverteilung der Trägerteilchen weitgehend halbiert, so daß mit Hilfe der im Becken aufgrund der Begasung und Vermischung zwischen Abwasser und Schlamm vorhandenen Turbulenzen eine Gleichverteilung der Trägerteilchen ohne weiteres aufrechterhalten werden kann. Die Turbulenzen können dabei mit Hilfe eines seitlichen oder auch einer flächenhaften Begasung erzeugt werden. Zur Unterstützung der Gleichverteilung ist es jedoch zweckmäßig, die Begasung des Abwasser-Schlamm-Gemisches sodurchzuführen, daß eine Zirkulationssströmung des Abwassers um eine vom Anfang des Strömungsweges zum Ende des Strömungsweges verlaufende Horizontalachse erzeugt wird und daß die Gaszufuhr etwa im letzten Drittel des Strömungsweges gegenüber der am Anfang des Strömungsweges eingestellten Gaszufuhr zumindest reduziert wird. Bei zwei benachbarten Zirkulationssströmungsabschnitten, die mit unterschiedlichen Gasmengen angetrieben werden, werden die im Abwasser schwebenden Trägerteilchen auf der gemeinsamen horizontalen Zirkulationsachse von dem mit niedrigen zu

4

0209877

dem mit höheren Gasmengen angetriebenen Zirkulationsströmungsabschnitt transportiert und auf diese Weise zum Anfngsbereich des Strömunsweges verfrachtet.

Als Trägerteilchen, die nicht nur den Mikroorganismen eine große Ansiedlungsfläche bieten, sondern mit denen auch aufgrund der angegebenen Maßnahmen eine hohe Gleichverteilung erreicht werden kann, haben sich insbesondere spezifisch leichte, eine offenzelliger oder retikulierte Struktur aufweisende Teilchen aus organischen Polymerverbindungen mit einer Größe von 5 bis 50 mm, mit offenen Makroporen von 0,1 bis 3 mm und mit einem spezifischen Gewicht im trockenen Zustand von10 bis 200 $kg/m^3$, vorzugsweise von 30 bis 100 $kg/m^3$, bewährt. Wie sich herausgestellt hat, können solche Trägerteilchen nicht nur ohne weiteres im Abwasser schweben, wobei sie den Mikroorganismen aufgrund ihrer Struktur eine bis ins Innere reichende große Ansiedlungsfläche bieten, sondern können auch durch Abwasser- und Gasströmungen in Bereiche unterschiedlichen hydrostatischen Druckes auf- und absteigen, wodurch dann der Stoffumsatz intensiviert wird.

Als geeignete Materialien für die Trägerteilchen, kommen beispielsweise Polyurethan, Polyäthylen, Polypropylen, Silikonpolymere oder Mischungen aus zwei oder mehreren dieser Materialien infrage. Selbstverständlich können auch Trägerteilchen aus anderen Materialien, die die angegebenen Bedingungen erfüllen, zum Einsatz kommen.

Von Vorteil ist es, das Abwsser sowie gegebenenfalls freien Schlamm teilweise bereits vor dem im mittleren Bereich bzw. an beiden Endbereichen durchgeführten Ableiten aus dem Becken abzuleiten. Damit wird erreicht, daß die Strömungsgeschwindigkeit zum Ablauf im mittleren Bereich bzw. an beiden Endbereich des Beckens und damit die Verfrachtung der Trägerteilchen zum Auslaufbereich reduziert wird.

Eine weitere Reduzierung der Verfrachtung der Trägerteilchen wird gemäß einer weiteren vorteilhaften Ausbildung der Erfindung dadurch erreicht, daß beim Teilableiten von Abwasser sowie gegebenenfalls freiem Schlamm vor dem im mittleren Bereich bzw. an beiden Endbereichen durchgeführten Ableiten eine im Vergleich zum Ableiten im mittleren Bereich bzw. an beiden Endbereichen größere Menge an Abwasser und gegebenenfalls Schlamm abgeleitet wird. Damit werden weniger Trägerteilchen bis zum Ende des Strömungsweges verfrachtet, wodurch ein Rücktransport der Trägerteilchen über die im Becken vorhandenen Turbulenzen zum Anfangsbereich des Strömungsweges leichter möglich ist. Abgesehen davon, stehen bei dieser Verfahrensweise in den Anfangsbereichen des Strömungsweges, in denen möglichst viel Biomasse zum Hauptabbau der Abwasserinhaltsstoffe notwendig ist, mehr Trägerteilchen und somit eine hohe Biomassenkonzentration zur Verfügung.

Zweckmäßigerweise wird das Teilableiten von Abwasser sowie gegebenenfalls Belebtschlamm vor dem im mittleren Bereich bzw. an beiden Endbereichen durchgeführten Ableiten nach einem Anfangsbereich des jeweiligen Strömungsweges, der 50 bis 80% des jeweiligen Strömungsweges umfaßt, über die Länge des restlichen Strömungsweges verteilt durchgeführt. Bei dieser Ausdehnung der an beiden Beckenenden bzw. im mittleren Bereich des Beckens ausgebildeten Anfangsbereich der Strömungswege ist sichergestellt, daß bei einem ausreichenden Sauerstoffgehalt des Abwassers der Hauptabbau sowie die Absorption der Abwasserinhaltsstoffe bereits abgeschlossen ist, wenn der Abzug von Abwasser und freiem Schlamm beginnt. Da dieser Abzug über die Länge der

0209877

nach den Anfangsbereichen verbleibenden Strömungswege verteilt durchgeführt wird, ist das insgesamt ablaufende behandelte Abwasser im Vergleich zu einem Abzug von Abwasser und freiem Schlamm nur im mittleren Bereich bzw. an beiden Endbereich des Beckens am Ende der beiden Strömungswege kaum höher belastet. Dies ist darauf zurückzuführen, daß bei einem über eine bestimmte Länge verteilten Abzug von Abwasser und freiem Schlamm der Abbau der verbleibenden Abwasserinhaltsstoffe auf die Länge des Abzugsbereiches gesehen intensiviert wird.

Weiterhin vorteilhaft ist es, wenn in den Bereichen des Ableitens auf- und/oder absteigende Abwasser- und/oder Gasströmungen aufrechterhalten werden. Damit kann auf einfache Weise der auf die Ableitstelle hin gerichteten Strömung eine senkrechte Strömung überlagert werden, mit der die sich vor einer Rückhalteeinrichtung an der Ableitstelle eventuell sammelnden Trägerteilchen fortgespült werden können. Diese auf- oder absteigenden Strömungen können beispielsweise dadurch erzeugt werden, daß das Behandlungsgas durch in Bodennähe des Beckens in einer Linie angeordnete Öffnungen, die als Ausströmer, Fritten oder Strahldüsen ausgebildet sein können, eingeleitet wird.

Eine Vorrichtung zur Durchführung des Verfahrens umfaßt ein im wesentlichen längs durchströmtes Becken, in dem Trägerteilchen für Mikroorganismen vorhanden sind, dem eine Abwasserzuleitung und eine Schlammzuleitung zugeordnet ist und das eine Ableitung für behandeltes Abwasser und gegebenenfalls freien Schlamm, Gaseintragseinrichtungen für ein sauerstoffhaltiges Behandlungsgas sowie Rückhalteeinrichtungen für Trägerteilchen vor der Ableitung aufweist. Erfindungsgemäß ist eine solche Vorrichtung dadurch gekennzeichnet, daß die Abwasserzuleitung und die Schlammzuleitung mit entsprechenden Anschlüssen an beiden Endbereichen und/oder mittleren Bereich des Beckens angeschlossen sind und die Ableitung für Abwasser und gegebenenfalls freien Schlamm im mittleren Bereich und/oder an beiden Endbereichen des Beckens angeschlossen ist.

Durch diesen einfachen Aufbau der Vorrichtung wird erreicht, daß in dem Becken zwei Strömungswege erzeugt werden, die jeweils etwa gleichlang sind und die sich jeweils in etwa über eine Beckenhälfte erstrecken. Durch diese Verkürzung der Strömungswege wird eine Rückverteilung der Trägerteilchen aufgrund von Turbulenzen im Becken erleichtert.

Von Vorteil ist es dabei, wenn vor dem Anschluß der Ableitung am Becken mit der Ableitung in Verbindung stehende Ablaufelemente vorhanden sind und sich diese Ablaufelemente nach Anfangsbereichen der Strömungswege, die jeweils 50% bis 80% der jeweiligen Strömungswege umfassen, über die Länge der restlichen Strömungswege erstrecken. Über diese Ablaufelemente kann dann bereits vor dem Ableiten im mittleren Bereich bzw. an beiden Endbereichen des Beckens ein Teilableiten von Abwasser und gegebenenfalls Schlamm erfolgen, wodurch die Strömungsgeschwindigkeit zu den Ableitstellen und damit die Trägerteilchenverfrachtung reduziert wird. Die Ablaufelemente können dabei beispielsweise aus Lochblechen und/oder Maschengittern gefertigt sein, wobei die Größe und die Verteilung der Lochung und/oder Maschen auf die gewünschte Verteilung des Abzugs von behandelndem Abwasser und freiem Belebtschlamm abgestimmt ist. Wird über die Länge der Ablaufelemente beispielsweise eine Abnahme der Menge des abzuziehenden Abwassers und Schlamms gewünscht, kann der Lochdurchmesser oder aber die Anzahl der Löcher auf die Länge der Ablaufelemente abnehmen. Die Ablaufelemente können auch als gelochte Rohre unterhalb des Flüssigkeitsspiegels ausgebildet sein.

Zum Freispülen der der Ableitung zugeordneten Rückhalteeinrichtungen sowie gegebenenfalls der Ablaufelemente von Trägerteilchen ist es außerdem von Vorteil, diese im Bereich von auf- und/oder absteigenden Abwasser- und/oder Gasströmungen anzuordnen. Dazu können unterhalb der Rückhalteeinrichtungen oder Ablaufelemente nahe des Beckenbodens in einer Linie Begasungseinrichtungen vorgesehen sein oder aber die Ablaufelemente der anderen Seitenwand nahe des Beckenbodens zugeordnet sein.

Um einen einfachen Aufbau der Vorrichtung zu erhalten, ist es zweckmäßig, wenn die Ablaufelemente zusammen mit den Rückhalteeinrichtungen eine Einheit bilden und als für Wasser und Schlamm durchlässige Wände und/oder Rohre längs der Beckenwand ausgebildet sind.

Zwei Ausführungsbeispiele einer Vorrichtung zur Durchführung des erfindungsgemäßen Verfahrens sind in den Zeichnungen schematisch dargestellt.

Figur 1 zeigt ein längsdurchströmtes Belebungsbecken, bei dem Abwasser und Schlamm an beiden Endbereichen des Beckens zugeführt und behandeltes Abwasser sowie gegebenenfalls freier Schlamm zumindest teilweise im mittleren Bereich des Beckens abgeleitet werden.

Figur 2 zeigt ein längsdurchströmtes Belebungsbecken, bei dem Abwasser und Schlamm im mittleren Bereich des Beckens zugeführt und behandeltes Abwasser sowie gegebenenfalls freier Schlamm zumindest teilweise an beiden Endbereichen des Beckens abgeleitet werden.

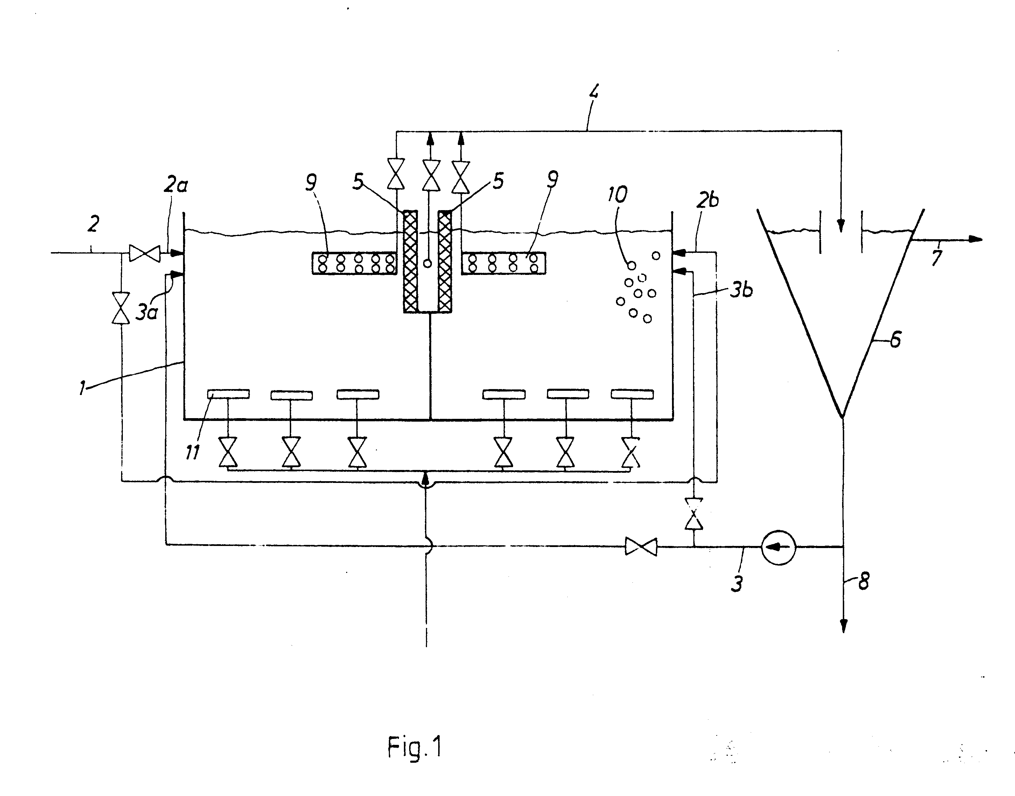

In Figur 1 ist mit 1 ein im wesentlichen längs durchströmtes Belebungsbecken bezeichnet. In dem Belebungsbecken 1 sind Trägerteilchen 10 für Mikroorganismen in einer solchen Zahl vorhanden, daß sie noch frei beweglich im Abwasser-Belebtschlamm-Gemisch schweben können. Wie sich gezeigt hat, ist bei Verwendung von Trägerteilchen aus organischen Polymerverbindungen mit einer Größe von 5 bis 50 mm, mit offenzelligen oder retikulierten Makroporen von 0,1 bis 3 mm und mit einem spezfischen Gewicht im trockenen Zustand von 10 bis 200 kg/m$^3$ ein Trägerteilchenanteil, der bis etwa 40% des Volumens des Belebungsbeckens ausmacht, zweckmäßig. Bei dieser Ausbildung und bei dieser Menge der Trägerteilchen können diese im Abwasser-Belebtschlamm-Gemisch aufgrund der vorhandenen Strömungen auf- und absteigen. Dabei werden die Trägerteilchen unterschiedlichen hydrostatischen Drücken ausgesetzt, wodurch der Stoffaustausch intensiviert wird.

Dem Belebungsbecken 1 ist eine Abwasserzuleitung 2 sowie eine Schlammzuleitung 3 zugeordnet. Die Abwasserzuleitung 2 sowie die Schlammzuleitung 3 sind über entsprechende Anschlüsse 2a, 2b bzw. 3a, 3b an beiden Endbereichen des Beckens 1 angeschlossen, so daß Abwasser und Schlamm an beiden Endbereichen des Beckens 1 zugeführt wird. Eine Ableitung 4 für Abwasser und freien Belebtschlamm ist im mittleren Bereich des Belebungsbeckens 1 angeschlossen, so daß von den beiden Endbereichen des Belebungsbeckens 1 zwei Strömungswege für Abwasser und Schlamm zum mittleren Bereich des Belebungsbeckens 1 ausgebildet sind. Die Ableitung 4 ist an ein Nachklärbecken 6 angeschlossen, von dem über eine Leitung 7 geklärtes Abwasser und über eine Schlammableitung 8 abgesetzter Schlamm abgezogen werden. Die Schlammableitung 8 steht mit der den Belebungsbecken zugeordneten Schlammzuleitung 3 in Verbindung, so daß ein Teil des abgesetzten Schlamms als Belebtschlamm dem Belebungsbecken (1) zugeführt und ein anderer Teil als Überschußschlamm aus dem System entfernt werden kann.

Dem Anschluß der Ableitung 4 für
Abwasser-Belebtschlamm-Gemisch am Belebungsbecken 1 sind
innerhalb des Belebungsbeckens 1 Rückhalteelemente 5 für
Trägerteilchen, die beispielsweise aus einer Sieb- oder
Lochwand bestehen können, in der Weise zugeordnet, daß die
von den beiden Endbereichen des Belebungsbeckens 1
kommende Strömung vor der Ableitung 4 durch diese
Rückhalteelemente 5 strömen muß. Um die
Durchströmgeschwindigkeit durch die Rückhalteelemente 5
möglichst gering zu halten, können diese beispielsweise
über die ganze Breite des Belebungsbeckens 1 ausgebildet
sein. Um die Strömungsgeschwindigkeit im Ablaufbereich
darüber hinaus noch weiter reduzieren zu können, sind vor
dem Anschluß der Ableitung 4 Ablaufelemente 9 im
Belebungsbecken 1 vorhanden, die ebenso an die Ableitung 4
angeschlossen sind. Diese Ablaufelemente 9 sind
beispielsweise als ineinander steckbare gelochte Rohre
ausgebildet, die unterhalb des Flüssigkeitsspiegels
angeordnet sind, so daß mit diesen Ablaufelementen 9 ein
über die Länge der Ablaufelemente 9 verteilter Abzug von
Abwasser und Belebtschlamm erfolgt. Die Länge der
Ablaufelemente 9 ist so eingestellt, daß sich an beiden
Endbereichen des Belebungsbeckens 1 jeweils ein
Anfangsbereich des Strömungsweges einstellt, der 50 bis
80% des jeweiligen Strömungsweges vom Endbereich des
Beckens zur Ableitung 4 im mittleren Bereich des Beckens 1
umfaßt.

Zur Versorgung der Mikroorganismen des Belebtschlamms mit
Sauerstoff sind Gaseintragseinrichtungen 11, die als
Fritten, Ausströmer oder Düsen ausgebildet sind, vorhanden,
über die Luft oder mit Sauerstoff angereicherte Luft nahe
des Beckenbodens eingeblasen wird. Die
Gaseintragseinrichtungen 11 sind vorzugsweise nur entlang
der einen Seitenwand des Belebungsbeckens 1 verlegt, wodurch mit Hilfe der aufsteigenden Gasblasen eine Zirkulationsbewegung des Abwassers um eine horizontale Achse des Belebungsbeckens 1 entsteht. Die Gaseintragseinrichtungen 11 können dabei in der Weise mit unterschiedlichen Gasmengen beschickt werden, daß die Gaszufuhr auf die Länge der Strömungswege abnimmt. Da im Abwasser schwebende Trägerteilchen bei zwei benachbarten Zirkulationsströmungsabschnitten, die mit unterschiedlichen Gasmengen angetrieben werden, auf der gemeinsamen horizontalen Zirkulationsachse von dem mit niedrigeren zu dem mit höheren Gasmengen angetriebenen Zirkulationsströmungsabschnitt wandern, kann auf diese Weise ein Rücktransport von Trägerteilchen erreicht werden. Dieser Rückstransport wird dabei dadurch erleichtert, daß die Länge der Strömungswege aufgrund des im mittleren Bereich vorgesehenen Ableitens von Abwasser-Belebtschlamm-Gemisches und der Zuleitung von zu behandelndem Abwasser und Belebtschlamm an beiden Endbereichen des Belebungsbeckens im Hinblick auf die gesamte Länge des Belebungsbeckens weitgehend halbiert sind. Durch den über die Länge der Strömungswege verteilten Abzug von Abwasser und freien Belebtschlamm wird außerdem von vornherein zumindest weitgehend vermieden, daß ein großer Anteil der Trägerteilchen 10 allmählich bis zumEnde des Strömungsweges verfrachtet wird. Insgesamt kann somit mit Hilfe der im Belebungsbecken 1 vorhandenen Turbulenzen ohne weiteres eine Gleichverteilung der Trägerteilchen aufrechterhalten werden.

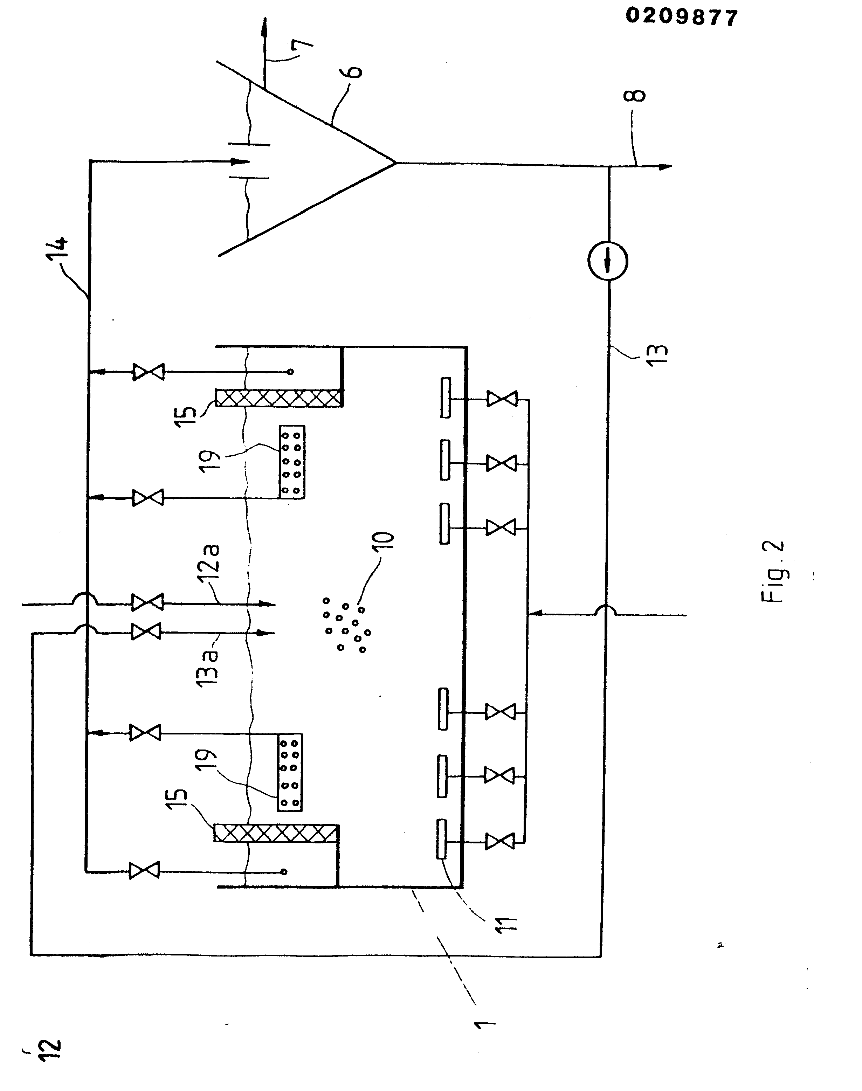

In Figur 2 ist ein der Figur 1 entsprechendes längsdurchströmtes Belebungsbecken 1 mit entsprechend beschaffenen Trägerteilchen 10 für Mikroorganismen und entsprechenden Gaseintragseinrichtungen 11 dargestellt.

Im Gegensatz zu Figur 1 werden jedoch bei dem in Figur 2 gezeigten Belebungsbecken Abwasser und Schlamm im mittleren Bereich des Beckens zugeführt und behandeltes Abwasser sowie gegebenenfalls freier Schlamm zumindest teilweise an beiden Endbereichen des Beckens abgeleitet.

Dem Belebungsbecken 1 ist eine Abwasserzuleitung 12 sowie eine Schlammzuleitung 13 zugeordnet. Die Abwasserzuleitung 12 sowie die Schlammzuleitung 13 sind über entsprechende Anschlüsse 12a bzw. 13a im mittleren Bereich des Beckens 1 angeschlossen, so daß Abwasser und Schlamm an beiden Endbereichen des Beckens 1 zugeführt wird. Ableitungen 14 für Abwasser und freien Belebtschlamm sind an beiden Endbereichen des Belebungsbeckens 1 angeschlossen, so daß vom mittleren Bereich des Belebungsbeckens 1 zwei Strömungswege für Abwasser und Schlamm zu den beiden Endbereichen des Belebungsbeckens 1 ausgebildet sind. Die Ableitung 14 ist an ein Nachklärbecken 6 angeschlossen, von dem über eine Leitung 7 geklärtes Abwasser und über eine Schlammableitung 8 abgesetzter Schlamm abgezogen werden. Die Schlammableitung 8 steht mit der den Belebungsbecken zugeordneten Schlammzuleitung 13 in Verbindung, so daß ein Teil des abgesetzten Schlamms als Belebtschlamm dem Belebungsbecken 1 zugeführt und ein anderer Teil als Überschußschlamm aus dem System entfernt werden kann.

Dem Anschluß der Ableitung 14 für Abwasser-Belebtschlamm-Gemisch am Belebungsbecken 1 sind innerhalb des Belebungsbeckens 1 Rückhalteelemente 15 für Trägerteilchen, die beispielsweise aus einer Sieb- oder Lochwand bestehen können, in der Weise zugeordnet, daß die vom mittleren Bereich des Belebungsbeckens 1 kommende Strömung vor der Ableitung 14 durch diese Rückhaltelemente 15 strömen muß. Um die Durchströmgeschwindigkeit durch die Rückhaltelemente 15 möglichst gering zu halten, können diese beispielsweise über die ganze Breite des Belebungsbeckens 1 ausgebildet sein. Um die Strömungsgeschwindigkeit im Ablaufbereich darüber hinaus noch weiter reduzieren zu können, sind vor dem Anschluß der Ableitung 14 Ablaufelemente 19 im Belebungsbecken 1 vorhanden, die ebenso an die Ableitung 14 angeschlossen
sind.Diese Ablaufelemente 19 sind beispielsweise als
ineinander steckbare gelochte Rohre ausgebildet, die
unterhalb des Flüssigkeitsspiegels angeordnet sind, so daß
mit diesen Ablaufelementen 19 ein über die Länge der
Ablaufelemente 19 verteilter Abzug von Abwasser und
Belebtschlamm erfolgt. Die Länge der Ablauflemente 19 ist
so eingestellt, daß sich im mittleren Bereich des
Belebungsbeckens 1 jeweils ein Anfangsbereich des
Strömungsweges einstellt, der 50 bis 80% des jeweiligen
Strömungsweges vom mittleren Bereich des Beckens zur
Ableitung 14 am jeweiligen Endbereich des Beckens 1 umfaßt.

1

**0209877**

<u>Patentansprüche</u>

1. Verfahren zur biologischen Reinigung von organische
Verunreinigungen enthaltendem Abwasser, bei dem das
Abwasser in einem im wesentichen längs durchströmten
Becken in Gegenwart von Trägerteilchen für
Mikroorganismen mit Schlamm vermischt und mit einem
sauerstoffhaltigen Gas begast wird, behandeltes
Abwasser und gegebenenfalls freier Schlamm unter
Zurückhaltung der Trägerteilchen aus dem Becken
abgezogen werden und bei dem über den Strömungsweg des
Abwasser-Schlamm-Gemisches eine weitgehende
Trägerteilchengleichverteilung aufrechterhalten wird,
dadurch gekennzeichnet, daß Abwasser und Schlamm an
beiden Endbereichen und/oder im mittleren Bereich des
Beckens zugeführt werden und behandeltes Abwasser
sowie gegebenenfalls freier Schlamm zumindest
teilweise im mittleren Bereich und/oder an beiden
Endbereichen abgeleitet werden.

2. Verfahren nach Anspruch 1, dadurch gekennzeichnet, daß
Abwasser sowie gegebenenfalls freier Schlamm teilweise
bereits vor dem im mittleren Bereich bzw. anbeiden
Endbereichen durchgeführten Ableiten aus dem Becken
abgeleitet werden.

3. Verfahren nach Anspruch 2, dadurch gekennzeichnet, daß beim Teilableiten von Abwasser sowie gegebenenfalls freiem Schlamm vor dem im mittleren Bereich bzw. an beiden Endbereichen durchgeführten Ableiten eine im Vergleich zum Ableiten im mittleren Bereich bzw. an beiden Endbereichen größere Menge an Abwasser und gegebenenfalls Schlamm abgeleitet wird.

4. Verfahren nach Anspruch 2 oder 3, dadurch gekennzeichnet, daß das Teilableiten von Abwasser sowie gegebenenfalls Schlamm vor dem im mittleren Bereich bzw. an beiden Endbereichen durchgeführten Ableiten nach einem Anfangsbereich des jeweiligen Strömungsweges, der 50 bis 80% der jeweiligen Strömungswege umfaßt, über die Länge der restlichen Strömungswege verteilt durchgeführt wird.

5. Verfahren nach einem der Ansprüche 1 bis 4, dadurch gekennzeichnet, daß in den Bereichen des Ableitens auf- und/oder absteigende Abwasser- und/oder Gasströmungen aufrechterhalten werden.

6. Vorrichtung zur Durchführung des Verfahrens nach einem der Ansprüche 1 bis 5 mit einem im wesentlichen längs durchströmten Becken, in dem Trägerteilchen für Mikroorganismen vorhanden sind, dem eine Abwasserzuleitung und eine Schlammzuleitung zugeordnet ist und das eine Ableitung für behandeltes Abwasser und gegebenenfalls freien Schlamm, Gaseintragseinrichtungen für ein sauerstoffhaltiges Behandlungsgas sowie Rückhalteeinrichtungen für Trägerteilchen vor der Ableitung aufweist, dadurch gekennzeichnet, daß die Abwasserzuleitung (2,12) und die Schlammzuleitung (3,13) mit entsprechenden Anschlüssen (2a,12a,2b); (3a,13a,3b) an beiden Endbereichen und/oder im mittleren Bereich des Beckens

3

0209877

(1) angeschlossen sind und die Ableitung (4,14)für
Abwasser und gegebenenfalls freien Schlamm im
mittleren Bereich und/oder an beiden Endbereichen des
Beckens (1) angeschlossen ist.

7. Vorrichtung nach Anspruch 6, dadurch gekennzeichnet,
daß vor dem Anschluß der Ableitung (4,14) am Becken
(1) mit der Ableitung (4,14) in Verbindung stehende
Ablaufelemente (9,19) vorhanden sind und sich diese
Ablaufelemente (9,19) nach Anfangsbereichen der
Strömungswege, die jeweils 50 bis 80% der jeweiligen
Strömungswege umfassen, über die Länge der restlichen
Strömungswege erstrecken.

8. Vorrichtung nach Anspruch6 oder 7, dadurch
gekennzeichnet, daß die der Ableitung (4,14)
zugeordneten Rückhalteeinrichtungen (5,15) für
Trägerteilchen sowie gegebenenfalls die Ablaufelemente
(9,19) im Bereich von auf- und/oder absteigenden
Abwasser- und/oder Gasströmungen angeordnet sind.

9. Vorrichtung nach Anspruch 7 oder 8, dadurch
gekennzeichnet, daß die Ablaufelemente (9,19) zusammen
mit den Rückhalteeinrichtungen (5,15_) eine Einheit
bilden und als für Wasser und Schlamm durchlässige
Wände und/oder Rohre längs der Beckenwand ausgebildet
sind.

Fig.1

Fig. 2